# EUROPÄISCHE PATENTANMELDUNG

(11) **EP 3 116 109 A1**
(43) Veröffentlichungstag der Anmeldung: **11.01.2017**
(21) Anmeldenummer: 16177967.3
(22) Anmeldetag: 05.07.2016
(51) Int. Cl.: H02K 11/33, H02P 25/02, H02K 1/24, H02K 1/27, H02K 17/16, H02P 27/06

(54) **VERFAHREN ZUR HERSTELLUNG EINER ELEKTRISCHEN MASCHINE MIT FLEXIBLEM ROTOR UND FAHRZEUG UMFASSEND EINE SOLCHE**

(30) Priorität: 09.07.2015 DE 102015212856
(71) Anmelder: Jungheinrich Aktiengesellschaft, 22047 Hamburg (DE)
(72) Erfinder: Geiner, Richard, 84032 Altdorf (DE); Schröder, Klaus, 92339 Beilngries (DE)
(74) Vertreter: Weickmann & Weickmann PartmbB

(57) **Zusammenfassung**

Die Erfindung betrifft ein Verfahren zur Herstellung einer elektrischen Maschine, insbesondere eines Elektromotors, eines Fahrzeugs, insbesondere eines Flurförderzeugs, umfassend mindestens die Schritte: Bereitstellen eines Gehäuses (10) mit einem Stator (12), mit Verbindungsmitteln zum Haltern eines Rotors und mit einer Steuerungseinheit (14), Auswählen eines für die Halterung durch das Gehäuse geeigneten Rotors (22, 24, 26, 28), Haltern des ausgewählten Rotors (22, 24, 26, 28) durch das Gehäuse (10), wobei der Rotor aus einer Gruppe von Rotoren ausgewählt ist, die wenigstens zwei Rotoren (20) aus der Gruppe Rotor für eine Asynchronmaschine (22), Rotor für eine Synchron-Reluktanzmaschine (26), Rotor für eine Synchron-Reluktanzmaschine mit Permanentmagneten (28), Rotor für eine Synchronmaschine und Rotor für eine permanenterregte Synchronmaschine (24) umfasst, und Einrichten und/oder Einstellen einer Steuerungseinheit (14), so dass die Steuerungseinheit (14) die für den Betrieb der ausgebildeten elektrischen Maschine erforderliche Ansteuerung erzeugen kann. Die Erfindung betrifft ferner die entsprechende Herstellung eines entsprechenden Fahrzeugs, das entsprechende Fahrzeug, ein entsprechendes Wartungs- bzw. Umrüstverfahren sowie die Herstellung mehrerer Fahrzeuge mit gleichen Maschinengehäusen aber verschiedenen elektrischen Maschinen.

## Beschreibung

Die vorliegende Erfindung betrifft ein Verfahren zur Herstellung einer elektrischen Maschine mit flexiblem Rotor sowie ein Verfahren zur Herstellung eines Fahrzeugs umfassend eine solche sowie ein Verfahren zur Wartung einer solchen elektrischen Maschine oder eines solchen Fahrzeugs sowie ein Fahrzeug mit einer solchen elektrischen Maschine und ein Verfahren zur Wartung eines solchen Fahrzeugs. Ferner betrifft die Erfindung ein Verfahren zur Herstellung von mindestens zwei unterschiedlichen elektrischen Maschinen und ein Verfahren zum Herstellen von mindestens zwei Fahrzeugen mit unterschiedlichen elektrischen Maschinen.

Elektrische Maschinen haben eine Vielzahl an technischen Anwendungen, insbesondere rotierende elektrische Maschinen, die als Elektromotoren und/oder elektrische Generatoren auch vielfach im Bereich von Fahrzeugen eingesetzt werden.

Eine solche rotierende elektrische Maschine umfasst im Allgemeinen einen Stator und einen Rotor, der bei Betrieb rotiert. Üblicherweise wird dabei der Stator in Form einer Sternschaltung an drei unterschiedliche Spannungsquellen bzw. Spannungsabnehmer gekoppelt. Bei vielen solch rotierender elektrischer Maschinen ist der Betrieb in beide Richtungen möglich, also dass einerseits elektrische Energie in eine Drehbewegung des Rotors und der dann damit verbundenen Komponenten, beispielsweise der Räder eines Fahrzeugs, umgewandelt wird und dass andererseits eine Drehbewegung des Rotors zur Erzeugung elektrischer Energie eingesetzt wird, beispielsweise um gleichzeitig die Räder eines Fahrzeugs zu bremsen.

Dabei gibt es verschiedene Typen von elektrischen Maschinen, beispielsweise Synchron-Reluktanzmaschinen, Synchron-Reluktanzmaschinen mit Permanentmagneten, Synchronmaschinen und permanenterregte Synchronmaschinen. Diese sind prinzipiell alle für den Zweck der Umwandlung von elektrischer Energie in Rotationsenergie des Rotors und damit beispielsweise in die Bewegung eines Fahrzeugs und für den Zweck der Umwandlung der Drehbewegung des Rotors in elektrische Energie beispielsweise beim Bremsen eines Elektrofahrzeugs geeignet. Sie weisen jedoch unterschiedliche Vor- und Nachteile und Unterschiede hinsichtlich verschiedener Leistungsmerkmale auf. Damit ist für verschiedene Verwendungszwecke jeweils eine bestimmte rotierende elektrische Maschine am geeignetsten.

Da aber die elektrische Maschine alleine keine Aufgabenstellung löst, sondern nur als Teil einer entsprechenden Gesamtvorrichtung, beispielsweise als Elektromotor in einem Fahrzeug, sind somit für verschiedene Verwendungszwecke, für die bestimmte elektrische Maschinen am geeignetsten sind, gleich unterschiedliche Gesamtvorrichtungen zu entwerfen, also beispielsweise für jede Verwendung ein unterschiedliches Fahrzeug. Dies bedingt einen erheblichen Mehraufwand im Rahmen der Herstellung.

Ferner muss aber insbesondere ein Nutzer, der hinsichtlich des Maschinentyps verschiedene technische Aufgaben lösen will, grundsätzlich mehrere Gesamtvorrichtungen vorsehen, beispielsweise also ein Fahrzeug mit einer Asynchronmaschine und ein weiteres Fahrzeug mit einer Synchronmaschine. Dies tritt insbesondere bei der Verwendung von Flurförderzeugen auf, deren äußerer Aufbau zwar identisch sein kann, deren Verwendung aber für bestimmte Zwecke jeweils eine bestimmte elektrische Maschine erfordert.

Aus der DE 102 39 557 B4 ist ein Elektromotor und eine Baureihe von Elektromotoren bekannt, wobei ein solche Elektromotor ein zweiteiliges Gehäuse umfasst, wobei durch Austausch des ersten Gehäuseteils der Rotor austauschbar ist, wobei durch Austausch des zweiten Gehäuseteils der Stator austauschbar ist. Ferner ist vorgesehen, dass zur Änderung der Funktionalität der Steuerung das zweite Gehäuseteil gegen ein gleichartiges mit entsprechend anderer Steuerung auszutauschen. Nachteilig hieran ist, dass zur Realisierung eines anderen Motors prinzipiell sowohl der Rotor, als auch das erste Gehäuseteil, als auch das zweite Gehäuseteil (zwecks Anpassung der Steuerung an den geänderten Rotor) und damit der Stator ausgetauscht werden müssen. Letztlich ist also nahezu der gesamte Elektromotor neu zu bauen oder wenigstens zusammen zu bauen, um einen Elektromotor zu realisieren bzw. anderer Art zu realisieren (wenn ein bestehender Elektromotor nicht vom gewünschten Typ ist).

Vor diesem Hintergrund ist es Aufgabe der vorliegenden Erfindung ein Verfahren zur Herstellung einer elektrischen Maschine bzw. eines Fahrzeugs umfassend eine solche anzugeben, bei dem entsprechend flexibel der Typ der elektrischen Maschine gewählt werden kann und dies insbesondere mit wenig Aufwand möglich ist. Ferner ist ein Verfahren anzugeben, wie im Rahmen der Wartung der Typ der elektrischen Maschine geändert werden kann, wobei der Aufwand gering zu halten ist. Ferner ist es Aufgabe ein Fahrzeug anzugeben, das eine solch flexible Wahl im Rahmen der Herstellung und der Wartung erlaubt, wobei der Aufwand gering zu halten ist.

Diese Aufgabe wird gelöst jeweils durch ein Verfahren zur Herstellung einer elektrischen Maschine eines Fahrzeugs gemäß Anspruch 1, ein Verfahren zur Herstellung eines entsprechenden Fahrzeugs gemäß Anspruch 3, ein Verfahren zur Wartung einer entsprechenden Maschine oder eines entsprechenden Fahrzeugs nach Anspruch 4, ein Fahrzeug nach Anspruch 5, ein Verfahren zur Wartung eines entsprechenden Fahrzeugs nach Anspruch 9, ein Verfahren zur Herstellung von mindestens zwei elektrischen Maschinen für Fahrzeuge gemäß Anspruch 10 und ein Verfahren zum Herstellen von mindestens zwei entsprechenden Fahrzeugen gemäß Anspruch 12 gelöst. Vorteilhafte Ausgestaltungen sind Gegenstand der abhängigen Ansprüche.

Das erfindungsgemäße Verfahren zur Herstellung einer elektrischen Maschine, insbesondere eines Elektromotors, eines Fahrzeugs, insbesondere eines Flurförderzeugs, umfasst mindestens die Schritte:
- Bereitstellen eines Gehäuses mit einem Stator und Verbindungsmitteln zum Haltern eines Rotors und mit einer Steuerungseinheit, die dafür ausgelegt ist, eingestellt und/oder eingerichtet zu werden, den Stator mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst;
- Auswählen eines für die Halterung durch das Gehäuse geeigneten Rotors aus einer Gruppe von für die Halterung durch das Gehäuse geeigneten Rotoren, die wenigstens zwei für die Halterung durch das Gehäuse geeignete Rotoren aus der Gruppe Rotor für eine Asynchronmaschine, Rotor für eine Synchron-Reluktanzmaschine, Rotor für eine Synchron-Reluktanzmaschine mit Permanentmagneten, Rotor für eine Synchronmaschine und Rotor für eine permanenterregte Synchronmaschine umfasst;
- Haltern des ausgewählten Rotors durch das Gehäuse zum Ausbilden einer Asynchronmaschine, einer Synchron-Reluktanzmaschine, einer Synchron-Reluktanzmaschine mit Permanentmagneten, einer Synchronmaschine oder einer permanenterregten Synchronmaschine; und
- Einrichten und/oder Einstellen einer Steuerungseinheit, so dass die Steuerungseinheit die für den Betrieb der ausgebildeten elektrischen Maschine erforderliche Ansteuerung erzeugen kann.

Durch das Bereitstellen eines Gehäuses mit einem Stator und Verbindungsmittel zum Haltern eines Rotors und das Auswählen eines von verschiedenen Rotoren, die zur Halterung in diesem Gehäuse geeignet sind, wird das Problem im Stand der Technik gelöst, dass verschiedene Baureihen für verschiedene Verwendungszwecke vorgesehen werden müssen. Stattdessen kann ein Typ von Gehäuse mit Stator und Verbindungsmitteln zum Haltern eines Rotors vorgesehen werden und je nach Verwendungszweck ein entsprechender Rotor eingesetzt werden, um eine elektrische Maschine auszubilden, die den entsprechenden Anforderungen genügt. Dabei macht sich die Erfindung zunutze, dass der Stator bei Asynchronmaschinen, Synchron-Reluktanzmaschinen, Synchron-Reluktanzmaschinen mit Permanentmagneten, Synchronmaschinen und permanenterregten Synchronmaschinen jeweils in gleicher Weise aufgebaut sein kann. Dadurch kann durch die Auswahl des entsprechenden Rotors eine entsprechende elektrische Maschine ausgebildet werden. Einzig muss noch die Steuerungseinheit, die die Spannung für die elektrische Maschine bereitstellt bzw. die erzeugte Spannung abgreift, entsprechend für den Betrieb der ausgebildeten elektrischen Maschine eingerichtet bzw. eingestellt werden.

Vorteilhaft ist insbesondere, dass die Auswahl, welcher der genannten Motoren konkret realisiert werden soll, getroffen werden kann ohne dass anschließend noch das Gehäuse, der Stator oder die gesamte Steuerungseinheit ausgetauscht werden müssten, da Gehäuse, Stator und Steuerungseinrichtung bereits für jeden Elektromotor der genannten Gruppe geeignet sind.

Bevorzugt umfasst das Einrichten bzw. Einstellen der Steuerungseinheit das Einsetzen und/oder Austauschen eines Leistungsteils der Steuerungseinheit und/oder das Programmieren der Steuerungseinheit. Damit lässt sich in leichter Weise das Einrichten bzw. Einstellen der Steuerungseinheit realisieren, denn der Austausch eines Leistungsteils einer Steuerungseinheit ist unkompliziert und Leistungsteile für entsprechende elektrische Motoren sind ebenfalls einfach auszuwählen bzw. denn das Programmieren bzw. Umprogrammieren einer programmierbaren Steuerungseinheit mit entsprechender Steuerungslogik ist mit nur geringem Aufwand verbunden.

Vorzugsweise umfasst eine entsprechende Steuerungseinheit ein Leistungsteil, wobei die Steuerungseinheit und/oder das Leistungsteil mit einem Stator verbindbar ist, also insbesondere entsprechend drei Anschlüsse umfasst, und eine Steuerungslogik, die mit dem Leistungsteil verbunden ist und vorzugsweise programmierbar ist.

Mit Hilfe dieses erfindungsgemäßen Verfahrens lässt sich insbesondere erfindungsgemäß ein Verfahren zur Herstellung eines Fahrzeugs, insbesondere eines Flurförderzeugs, realisieren, wobei dieses Verfahren benutzt wird, indem das Gehäuse vor und/oder nach dem Haltern des Rotors in einem Fahrzeug angeordnet und/oder ausgebildet wird, um eine elektrische Maschine des Fahrzeugs auszubilden. Damit ist insbesondere gemeint, dass zuerst das Gehäuse mit Stator und Steuerungseinheit ausgebildet werden kann, dann in dem Gehäuse ein Rotor gehaltert wird und das Gehäuse mit Rotor anschließen im Fahrzeug angeordnet werden, so dass eine elektrische Maschine ausgebildet ist. Es ist aber auch jede andere Reihenfolge denkbar, beispielsweise zuerst Ausbilden des Gehäuses, dann Anordnen des Gehäuses im Fahrzeug und erst dann Haltern des Rotors oder auch Anordnen der Einzelelemente des Gehäuses wie Stator, Steuereinheit, usw. im Fahrzeug, anschließendes Ausbilden des Gehäuses mit diesen Einzelelementen und Anschließendes Haltern des Rotors. Somit lassen sich in einem einzigen standardisierten Herstellungsprozess verschiedene Fahrzeuge mit verschiedenen elektrischen Maschinen ausbilden, womit der Entwurf unterschiedlicher Fahrzeugreihen vermieden werden kann.

Die gemäß dem erfindungsgemäßen Verfahren hergestellten elektrischen Maschinen und/oder Fahrzeuge lassen sich erfindungsgemäß mit einem Verfahren zur Wartung einer elektrischen Maschine bzw. eines Fahrzeugs warten bzw. umrüsten, das mindestens die folgenden Schritte umfasst:
- Entfernen des gehalterten Rotors;
- Auswählen eines für die Halterung durch das Gehäuse geeigneten Rotors aus einer Gruppe von für die Halterung durch das Gehäuse geeigneten Rotoren, die wenigstens zwei für die Halterung durch das Gehäuse geeigneten Rotoren aus der Gruppe Rotor für eine Asynchronmaschine, Rotor für eine Synchron-Reluktanzmaschine, Rotor für eine Synchron-Reluktanzmaschine mit Permanentmagneten, Rotor für eine Synchronmaschine und Rotor für eine permanenterregte Synchronmaschine umfasst;

- Haltern des ausgewählten Rotors durch das Gehäuse zum Ausbilden einer elektrischen Maschine, bevorzugt einer Asynchronmaschine, einer Synchron-Reluktanzmaschine, einer Synchron-Reluktanzmaschine mit Permanentmagneten, einer Synchronmaschine oder einer permanenterregten Synchronmaschine; und
- Einrichten und/oder Einstellen der Steuerungseinheit, so dass die Steuerungseinheit die für den Betrieb der ausgebildeten elektrischen Maschine erforderliche Ansteuerung erzeugen kann;
   und das keinen der folgenden Schritte umfasst:
   - Austauschen des Gehäuses;
   - Austauschen des Stators; oder
   - Austauschen der Steuerungseinheit..

Vorteilhaft ist insbesondere, dass die Auswahl, welcher der genannten Motoren konkret realisiert werden soll, getroffen werden kann ohne dass anschließend noch das Gehäuse, der Stator oder die gesamte Steuerungseinheit ausgetauscht werden müssten.

Durch dieses erfindungsgemäße Verfahren zur Wartung lässt sich eine entsprechende elektrische Maschine oder ein entsprechendes Fahrzeug leicht für einen anderen Anforderungszweck umrüsten, denn es genügt ein Austausch des Rotors durch einen hinsichtlich der Aufhängung gleichartig und hinsichtlich der elektrischen Nutzung verschiedenartig aufgebauten Rotors sowie ein Austausch des Leistungsteils einer Steuerungseinheit oder ein Programmieren oder Umprogrammieren der Steuerungseinheit. Damit kann insbesondere auch anwenderseitig eine entsprechende Umrüstung vorgenommen werden, was insbesondere herstellerseitig durch Bereitstellung von entsprechenden verschiedenen Rotoren und einer entsprechenden Zugänglichkeit der elektrischen Maschine begünstigt werden kann.

Ein weiterer Aspekt der Erfindung ist ein erfindungsgemäßes Fahrzeug, insbesondere ein Flurförderzeug, das ein Gehäuse mit einem Stator und Verbindungsmitteln zum Haltern eines Rotors und eine mit dem Stator elektrisch verbundene Steuerungseinheit zum Ansteuern des Stators umfasst. Dabei ist die Steuerungseinheit dafür ausgelegt, eingestellt und/oder eingerichtet zu werden, den Stator mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst, so dass durch Haltern eines Haltern eines Rotors aus der Gruppe Rotor für eine Asynchronmaschine, Rotor für eine Synchron-Reluktanzmaschine, Rotor für eine Synchron-Reluktanzmaschine mit Permanentmagneten, Rotor für eine Synchronmaschine und Rotor für eine permanenterregte Synchronmaschine und Einstellen und/oder Einrichten der Steuerungseinheit zur Ansteuerung des Stators und des gehalterten Rotors eine Asynchronmaschine, eine Synchron-Reluktanzmaschine, eine Synchron-Reluktanzmaschine mit Permanentmagneten, eine Synchronmaschine oder eine permanenterregte Synchronmaschine ausgebildet ist.

Ein solches Fahrzeug bzw. ein solcher Fahrzeugrohling ist zwar noch nicht fahrfähig, kann aber durch Auswahl eines geeigneten Rotors und entsprechende Einstellungen der Steuerungseinheit schnell zu einem Fahrzeug mit gewünschtem Typ elektrischer Maschine vervollständigt bzw. umgerüstet werden. Dabei ist unter Ansteuermodus insbesondere zu verstehen, dass das Leistungsteil die für den entsprechenden Typ elektrischen Motors erforderlichen Spannungsniveaus auf die Anschlüsse des Stators legt bzw. davon abgreift.

Ein solches erfindungsgemäßes Fahrzeug ist insbesondere vorteilhaft, da es nicht nur als Rohling innerhalb eines Herstellungsprozesses zur Herstellung von Fahrzeugen mit verschiedenen elektrischen Maschinen dienen kann, sondern es kann auch anwenderseitig im Rahmen eines Bausatzes mit einem Fahrzeug und mehreren verschiedenen Rotoren genutzt werden, um es dem Anwender zu erlauben, je nach Verwendungszweck auf eine entsprechende elektrische Maschine umzurüsten.

Vorzugsweise umfasst die Steuerungseinheit eine Steuerungslogik und ein Leistungsteil, wobei die Steuerungslogik elektrisch zur Ansteuerung des Leistungsteils mit diesem und das Leistungsteil elektrisch zur Ansteuerung des Stators mit diesem, insbesondere über drei Leitungen, verbunden ist. Dies erlaubt eine besonders einfache Vervollständigung bzw. Umrüstung des Fahrzeugs, da lediglich der geeignete Rotor eingesetzt werden muss und entsprechend Steuerungslogik und/oder Leistungsteil der Steuerungseinheit modifiziert werden müssen. Die Verwendung von drei Anschlussleitungen ist vorteilhaft, da dies die übliche Ansteuerung eines Stators ermöglicht.

In vorteilhafter Weise, kann das Leistungsteil auswechselbar ausgestaltet sein, wobei die Steuerungseinheit dafür ausgelegt ist, dass die Einstellung und/oder Einrichtung der Steuerungseinheit das Austauschen des Leistungsteils umfassen kann. Denn der Austausch des Leistungsteils ist prinzipiell unkompliziert und stellt gleichzeitig sicher, dass die exakt richtige Ansteuerung des Stators erfolgt. Insbesondere kann im Rahmen eines Bausatzes auch ein Fahrzeug mit mehreren verschiedenen Rotoren und entsprechend dazu passenden Leistungsteilen bereitgestellt werden. Damit ist ein einfaches Umrüsten ermöglicht.

Vorzugsweise ist ein erfindungsgemäßes Fahrzeug vervollständigt, also mit einem durch das Gehäuse gehalterten Rotor versehen, wobei der Rotor aus einer Gruppe von Rotoren ist, die Rotor für Asynchronmaschine, Rotor für Synchron-Reluktanzmaschine, Rotor für Synchron-Reluktanzmaschine mit Permanentmagneten, Rotor für Synchronmaschine und Rotor für permanenterregte Synchronmaschine umfasst.

Ein erfindungsgemäßes Fahrzeug kann erfindungsgemäß gewartet werden, wobei die Wartung mindestens die folgenden Schritte umfasst:
- Auswählen eines für die Halterung durch das Gehäuse geeigneten Rotors aus einer Gruppe von für die Halterung durch das Gehäuse geeigneten Rotoren, die wenigstens zwei Rotoren aus der Gruppe Rotor für eine Asynchronmaschine, Rotor für eine Synchron-Reluktanzmaschine, Rotor für eine Synchron-Reluktanzmaschine mit Permanentmagneten, Rotor für eine Synchronmaschine und Rotor für eine permanenterregte Synchronmaschine umfasst;
- Haltern des ausgewählten Rotors durch das Gehäuse zum Ausbilden einer elektrischen Maschine, bevorzugt einer Asynchronmaschine, einer Synchron-Reluktanzmaschine, einer Synchron-Reluktanzmaschine mit Permanentmagneten, einer Synchronmaschine oder einer permanenterregten Synchronmaschine; und
- Einrichten und/oder Einstellen der Steuerungseinheit, so dass die Steuerungseinheit die für den Betrieb der ausgebildeten elektrischen Maschine erforderliche Ansteuerung erzeugen kann und keinen der Schritte umfasst:
   - Austauschen des Gehäuses;
   - Austauschen des Stators; oder
   - Austauschen der Steuerungseinheit.

Dies kann durch den vorherigen Schritt des Entfernens eines bisher gehalterten Rotors ergänzt werden.

Damit ist eine einfache Umrüstung des erfindungsgemäßen Fahrzeugs realisiert, insbesondere kann das erfindungsgemäße Verfahren zur Wartung eines Fahrzeugs auch anwenderseitig eingesetzt werden, indem entsprechende Rotoren und ggf. Leistungsteile bereitgestellt werden. Alternativ oder zusätzlich zu der Bereitstellung unterschiedlicher Leistungsteile kann auch die Steuerungseinheit einstellbar oder programmierbar ausgebildet sein.

Ein weiterer Aspekt der Erfindung ist ein erfindungsgemäßes Verfahren zur Herstellung von mindestens zwei elektrischen Maschinen, insbesondere von Elektromotoren, für Fahrzeuge, insbesondere Flurförderzeuge, umfassend zur Herstellung einer ersten elektrischen Maschine mindestens die Schritte:
- Bereitstellen eines Gehäuses mit Stator, einer elektrisch mit dem Stator verbundenen Steuerungseinheit, die dafür ausgelegt ist, eingestellt und/oder eingerichtet zu werden, den Stator mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst, und Verbindungsmitteln zum Haltern eines Rotors aus einer Gruppe von gleichen Gehäusen für elektrische Maschinen; und
- Haltern eines ersten Rotors durch das Gehäuse, wobei der erste Rotor aus einer Gruppe von Rotoren ist, die Rotor für Asynchronmaschine, Rotor für Synchron-Reluktanzmaschine, Rotor für Synchron-Reluktanzmaschine mit Permanentmagneten, Rotor für Synchronmaschine und Rotor für permanenterregte Synchronmaschine umfasst;
   und umfassend zur Herstellung einer weiteren elektrischen Maschine mindestens die Schritte:
   - Bereitstellen eines weiteren Gehäuses mit Stator, einer elektrisch mit dem Stator verbundenen Steuerungseinheit, die dafür ausgelegt ist, eingestellt und/oder eingerichtet zu werden, den Stator mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst, und Verbindungsmitteln zum Haltern eines Rotors aus einer Gruppe von gleichen Gehäusen für elektrische Maschinen; und
   - Haltern eines weiteren Rotors durch das Gehäuse, wobei der weitere Rotor ein anderer als der erste Rotor aus der Gruppe von Rotoren ist, aus der auch der erste Rotor ausgewählt wurde.

Durch dieses erfindungsgemäße Verfahren lassen sich in standardisierter Weise mit einem standardisierten Prozess verschiedene elektrische Maschinen mit verschiedenen Leistungsparametern herstellen, wobei sowohl der Entwurf als auch das Bereitstellen von verschiedenen Baureihen vermieden wird.

Bevorzugt umfasst das erfindungsgemäße Verfahren zur Herstellung von mindestens zwei elektrischen Maschinen ferner den Schritt:
- Einrichten und/oder Einstellen der Steuerungseinheit, insbesondere das Austauschen der Steuerungseinheit umfassend, so dass die Ansteuerung des Stators durch die Steuerungseinheit entsprechend der Art des ersten Rotors oder des weiteren Rotors ermöglicht ist und keinen der Schritte umfasst:
   - Austauschen des Gehäuses;
   - Austauschen des Stators; oder
   - Austauschen der Steuerungseinheit.

Durch diese erfindungsgemäße Weiterbildung ist sichergestellt, dass für die Auswahl des gewünschten Rotors und das Ausbilden der entsprechenden elektrischen Maschine nur geringfügige Modifikationen vorgenommen werden müssen.

Ein weiterer Aspekt der Erfindung ist ein erfindungsgemäßes Verfahren zum Herstellen von mindestens zwei Fahrzeugen mit elektrischen Maschinen, insbesondere von Flurförderzeugen, wobei das Gehäuse vor und/oder nach dem Haltern des Rotors in einem Fahrzeug und das weitere Gehäuse vor und/oder nach dem Haltern des weiteren Rotors in einem weiteren Fahrzeug angeordnet und/oder ausgebildet werden, um elektrische Maschinen der mindestens zwei Fahrzeuge auszubilden. Damit ist insbesondere gemeint, dass zuerst das Gehäuse mit Stator und Steuerungseinheit ausgebildet werden kann, dann in dem Gehäuse ein Rotor gehaltert wird und das Gehäuse mit Rotor anschließen im Fahrzeug angeordnet werden, so dass eine elektrische Maschine ausgebildet ist. Es ist aber auch jede andere Reihenfolge denkbar, beispielsweise zuerst Ausbilden des Gehäuses, dann Anordnen des Gehäuses im Fahrzeug und erst dann Haltern des Rotors oder auch Anordnen der Einzelelemente des Gehäuses wie Stator, Steuereinheit, usw. im Fahrzeug, anschließendes Ausbilden des Gehäuses mit diesen Einzelelementen und Anschließendes Haltern des Rotors.

Vorzugsweise sind bei allen hier genannten Verfahren bzw. Fahrzeugen die elektrischen Maschine vom Typ rotierende elektrische Maschine und insbesondere vom Typ Elektromotor, wobei das Gehäuse bevorzugt ein Motorgehäuse ist.

Anzumerken ist, dass die Schritte, die die erfindungsgemäßen Verfahren umfassen, nicht nur in der Reihenfolge entsprechend der Nennung ausgeführt werden können, sondern in jeder beliebigen Reihenfolge, die technisch möglich ist. So kann beispielsweise die Einrichtung und/oder Einstellung der Steuerungseinheit vor oder nach dem Bereitstellen des Gehäuses oder des Haltern des Rotors erfolgen oder beispielsweise kann bei der Herstellung von zwei unterschiedlichen elektrischen Maschinen zuerst für beide Gehäuse bereitgestellt werden und für beide unterschiedliche Rotoren ausgewählt werden, bevor die Rotoren eingesetzt werden.

Unter Bezugnahme auf die Figur wird nachstehend ein Ausführungsbeispiel der Erfindung mit einer bestimmten Merkmalskombination dargestellt.

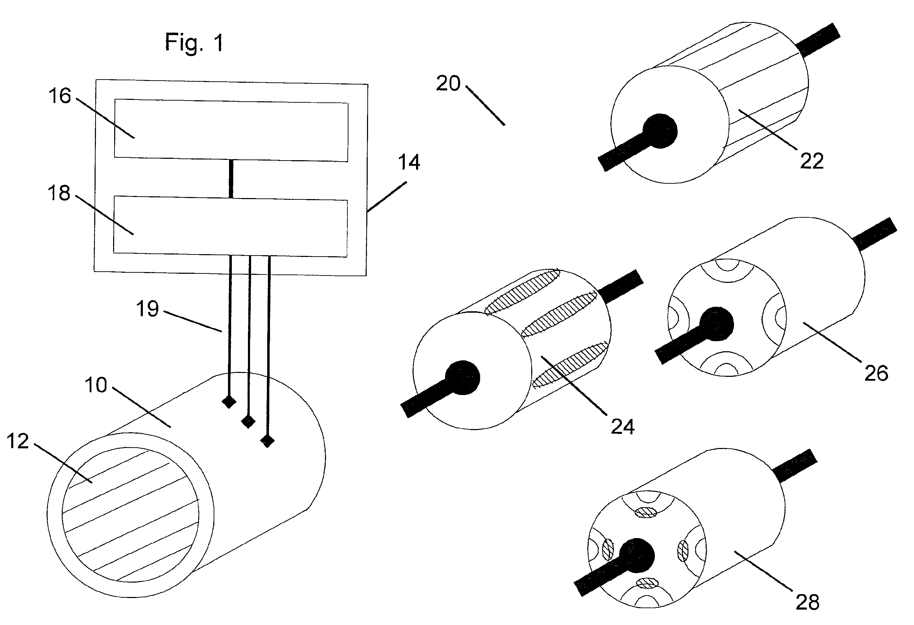

- Figur 1: zeigt den Zustand vor einem Schritt eines erfindungsgemäßen Verfahrens.

Wie in Figur 1 gezeigt, wird im Rahmen des erfindungsgemäßen Verfahrens zur Herstellung einer elektrischen Maschine eines Fahrzeugs ein Gehäuse 10 mit einem Stator 12 und Verbindungsmitteln zum Haltern eines Rotors (nicht gezeigt) bereitgestellt. Das Gehäuse 10 bzw. der Stator 12 sind in üblicher Weise über drei Verbindungsleitungen mit einer Steuerungseinheit 14 verbunden. Die Steuerungseinheit 14 umfasst die Steuerungslogik 16 und das Leistungsteil 18, wobei die Steuerungslogik 16 mit dem Leistungsteil 18 verbunden ist, um dieses entsprechend anzusteuern, wobei das Leistungsteil 18 über die Leitungen 19 mit den Anschlüssen des Gehäuses 10 und damit mit dem Stator 12 elektrisch verbunden ist.

Ferner wird eine Gruppe von für die Halterung durch das Gehäuse geeignete Rotoren 20 bereitgestellt. Diese umfasst im vorliegenden Ausführungsbeispiel einen Rotor für eine Asynchronmaschine 22, einen Rotor für eine permanenterregte Synchronmaschine 24, einen Rotor für eine Synchron-Reluktanzmaschine 26 und einen Rotor für eine Synchron-Reluktanzmaschine mit Permanentmagneten 28. Wie ersichtlich, sind diese Rotoren 20 alle dafür ausgelegt, in dem Gehäuse 10 gehaltert zu werden.

Entsprechend wird in einem nächsten Schritt einer der Rotoren 20 ausgewählt und in dem Gehäuse 10 gehaltert. Durch die Wahl eines geeigneten der Rotoren 20 lässt sich entsprechend den Anforderungen wahlweise eine Asynchronmaschine, eine Synchron-Reluktanzmaschine, eine Synchron-Reluktanzmaschine mit Permanentmagneten oder eine permanenterregte Synchronmaschine herstellen.

In einem Folgeschritt muss noch entsprechend die Steuerungseinheit 14 eingerichtet und/oder eingestellt werden, so dass die Steuerungseinheit 14 die für den Betrieb der ausgebildeten elektrischen Maschine erforderliche Ansteuerung erzeugen kann. Im Ausführungsbeispiel erfolgt dies vorteilhafterweise durch eine Umprogrammierung der Steuerungslogik 16, so dass sie entsprechend das Leistungsteil 18 ansteuert, damit dies die geeigneten elektrischen Signale erzeugt. Vorteilhafterweise umfasst das Ausführungsbeispiel noch entsprechende Eingabe- bzw. Einstellvorrichtungen, zum Einstellen der Steuerungslogik 16 der Steuerungseinheit 14. Damit ist dann entsprechend eine gewünschte elektrische Maschine, insbesondere ein Elektromotor ausgebildet.

Entsprechend kann im Folgenden ein weiteres Gehäuse 10 bereitgestellt werden, in das entsprechend ein anderer der Rotoren 20 eingesetzt werden kann, um eine andere elektrische Maschine auszubilden. Beispielsweise könnte bei einer ersten Herstellung der Rotor für eine Asynchronmaschine 22 in das Gehäuse 10 eingesetzt werden, um eine Asynchronmaschine auszubilden. In einem weiteren Herstellungsverfahren kann dann nochmal ein baugleiches Gehäuse 10 bereitgestellt werden, wobei dann beispielsweise der Rotor für eine Synchron-Reluktanzmaschine 28 eingesetzt wird, um eine Synchron-Reluktanzmaschine auszubilden.

Das Gehäuse 10 und die Steuerungseinheit 14 können auch bereits Teil eines nicht gezeigten Fahrzeugs, insbesondere eines Flurförderzeugs sein. Dieses erfindungsgemäße Fahrzeug ist dann geeignet, flexibel und für den Nutzer wählbar eine bestimmte elektrische Maschine auszubilden, indem ein geeigneter der Rotoren 20 eingesetzt wird und die Steuerungseinheit 14 entsprechend eingerichtet und/oder eingestellt wird. Damit lässt sich bei dem erfindungsgemäßen Fahrzeug, bei dem insbesondere die Steuerungseinheit 14 dafür ausgelegt ist, den Stator 12 entsprechend einem der Rotoren 20 anzusteuern, leicht das Fahrzeug auf einen anderen Typ elektrischer Maschine bzw. einen anderen Elektromotor umrüsten, indem der bisherige Rotor 20 entfernt wird und ein anderer Rotor aus der Gruppe der Rotoren 20 ausgewählt und in das Gehäuse eingesetzt wird, wobei die Steuerungseinheit 14 anschließend entsprechend eingestellt und/oder eingestellt werden kann.

Erfindungsgemäß lässt sich auch insbesondere in der in der Figur 1 gezeigten Art ein Bausatz bereitstellen, der wenigstens ein Gehäuse 10, eine Steuerungseinheit 14 und eine Gruppe von Rotoren 20 umfasst, wobei der Bausatz in der geschilderten Art im Rahmen der Herstellung, insbesondere der erfindungsgemäßen Herstellung, von elektrischen Maschinen bzw. Fahrzeugen mit elektrischen Maschinen genutzt werden kann, wobei insbesondere auch anwenderseitig eine entsprechende Umrüstung dadurch ermöglicht wird. Dabei ist vor allem entscheidend, dass die Steuerungseinheit 14 dafür ausgelegt ist, entsprechend verschiedene Ansteuermodi für das Gehäuse 10 bzw. den Stator 12 zu erzeugen und dass die Rotoren 20 geeignet sind, in dem Gehäuse 10 im Innern des Stators 12 gehaltert zu werden.

## Patentansprüche

1. Verfahren zur Herstellung einer elektrischen Maschine, insbesondere eines Elektromotors, eines Fahrzeugs, insbesondere eines Flurförderzeugs, umfassend mindestens die Schritte:
- Bereitstellen eines Gehäuses (10) mit einem Stator (12) und Verbindungsmitteln zum Haltern eines Rotors und mit einer Steuerungseinheit (14), die dafür ausgelegt ist, eingestellt und/oder eingerichtet zu werden, den Stator (12) mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst;
- Auswählen eines für die Halterung durch das Gehäuse geeigneten Rotors (22, 24, 26, 28) aus einer Gruppe von für die Halterung durch das Gehäuse geeigneten Rotoren (20), die wenigstens zwei für die Halterung durch das Gehäuse geeignete Rotoren (20) aus der Gruppe Rotor für eine Asynchronmaschine (22), Rotor für eine Synchron-Reluktanzmaschine (26), Rotor für eine Synchron-Reluktanzmaschine mit Permanentmagneten (28), Rotor für eine Synchronmaschine und Rotor für eine permanenterregte Synchronmaschine (24) umfasst;
- Haltern des ausgewählten Rotors (22, 24, 26, 28) durch das Gehäuse (10) zum Ausbilden einer Asynchronmaschine, einer Synchron-Reluktanzmaschine, einer Synchron-Reluktanzmaschine mit Permanentmagneten, einer Synchronmaschine oder einer permanenterregten Synchronmaschine; und
- Einrichten und/oder Einstellen einer Steuerungseinheit (14), so dass die Steuerungseinheit (14) die für den Betrieb der ausgebildeten elektrischen Maschine erforderliche Ansteuerung erzeugen kann.

2. Verfahren zur Herstellung einer elektrischen Maschine nach Anspruch 1, wobei das Einrichten und/oder Einstellen der Steuerungseinheit (14) das Einsetzen und/oder Austauschen eines Leistungsteils (18) der Steuerungseinheit (14), die mit dem Stator (12) verbindbar ist, und/oder das Programmieren der Steuerungseinheit (14), insbesondere einer mit einem Leistungsteil (18) verbundenen Steuerungslogik (16), umfasst.

3. Verfahren zur Herstellung eines Fahrzeugs, insbesondere eines Flurförderzeugs, unter Verwendung eines Verfahrens nach Anspruch 1 oder 2, wobei das Gehäuse (10) vor oder nach dem Haltern des Rotors (22, 24, 26, 28) in einem Fahrzeug angeordnet und vor oder nach dem Haltern des Rotors (22, 24, 26, 28) in einem Fahrzeug ausgebildet wird, um eine elektrische Maschine des Fahrzeugs auszubilden.

4. Verfahren zur Wartung einer nach Anspruch 1 oder 2 hergestellten elektrischen Maschine, insbesondere eines Elektromotors, eines Fahrzeugs, insbesondere eines Flurförderzeugs, oder zur Wartung eines nach Anspruch 3 hergestellten Fahrzeugs umfassend mindestens die Schritte:
- Entfernen des gehalterten Rotors (22, 24, 26, 28);
- Auswählen eines für die Halterung durch das Gehäuse geeigneten Rotors (22, 24, 26, 28) aus einer Gruppe von für die Halterung durch das Gehäuse geeigneten Rotoren (20), die wenigstens zwei für die Halterung durch das Gehäuse geeigneten Rotoren (20) aus der Gruppe Rotor für eine Asynchronmaschine (22), Rotor für eine Synchron-Reluktanzmaschine (26), Rotor für eine Synchron-Reluktanzmaschine mit Permanentmagneten (28), Rotor für eine Synchronmaschine und Rotor für eine permanenterregte Synchronmaschine (24) umfasst;
- Haltern des ausgewählten Rotors (22, 24, 26, 28) durch das Gehäuse (10) zum Ausbilden einer elektrischen Maschine, bevorzugt einer Asynchronmaschine (22), einer Synchron-Reluktanzmaschine (26), einer Synchron-Reluktanzmaschine mit Permanentmagneten (28), einer Synchronmaschine oder einer permanenterregten Synchronmaschine (24); und
- Einrichten und/oder Einstellen der Steuerungseinheit (14), so dass die Steuerungseinheit (14) die für den Betrieb der ausgebildeten elektrischen Maschine erforderliche Ansteuerung erzeugen kann und umfassend keinen der Schritte:
- Austauschen des Gehäuses (10);
- Austauschen des Stators (12); oder
- Austauschen der Steuerungseinheit (14).

5. Fahrzeug oder Fahrzeugrohling, insbesondere Flurförderzeug, umfassend ein Gehäuse (10) mit einem Stator (12) und Verbindungsmitteln zum Haltern eines Rotors und eine mit dem Stator (12) elektrisch verbundene Steuerungseinheit (14) zum Ansteuern des Stators (12), **dadurch gekennzeichnet, dass** die Steuerungseinheit (14) dafür ausgelegt ist, eingestellt und/oder eingerichtet zu werden, den Stator (12) mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst, so dass durch Haltern eines Haltern eines Rotors (22, 24, 26, 28) aus der Gruppe Rotor für eine Asynchronmaschine (22), Rotor für eine Synchron-Reluktanzmaschine (26), Rotor für eine Synchron-Reluktanzmaschine mit Permanentmagneten (28), Rotor für eine Synchronmaschine und Rotor für eine permanenterregte Synchronmaschine (24) und Einstellen und/oder Einrichten der Steuerungseinheit (14) zur Ansteuerung des Stators (12) und des gehalterten Rotors (22, 24, 26, 28) eine Asynchronmaschine, eine Synchron-Reluktanzmaschine, eine Synchron-Reluktanzmaschine mit Permanentmagneten, eine Synchronmaschine oder eine permanenterregte Synchronmaschine ausgebildet ist.

6. Fahrzeug oder Fahrzeugrohling nach Anspruch 5, **dadurch gekennzeichnet, dass** die Steuerungseinheit (14) eine Steuerungslogik (16) und ein Leistungsteil (18) umfasst, wobei die Steuerungslogik (16) elektrisch zur Ansteuerung des Leistungsteils (18) mit diesem und das Leistungsteil (18) elektrisch zur Ansteuerung des Stators (12) mit diesem, insbesondere über drei Leitungen (19), verbunden ist.

7. Fahrzeug oder Fahrzeugrohling nach Anspruch 6, **dadurch gekennzeichnet, dass** das Leistungsteil (18) auswechselbar ausgestaltet ist, wobei die Steuerungseinheit (14) dafür ausgelegt ist, dass die Einstellung und/oder Einrichtung der Steuerungseinheit (14) das Austauschen des Leistungsteils (18) umfassen kann.

8. Bausatz umfassend ein Fahrzeug oder Fahrzeugrohling nach einem der Ansprüche 5 bis 7 und einen Satz von mindestens zwei unterschiedlichen durch das Gehäuse (10) halterbare Rotoren, die aus einer Gruppe von Rotoren (20) ist, die Rotor für Asynchronmaschine (22), Rotor für Synchron-Reluktanzmaschine (26), Rotor für Synchron-Reluktanzmaschine mit Permanentmagneten (28), Rotor für Synchronmaschine und Rotor für permanenterregte Synchronmaschine (24) umfasst.

9. Fahrzeug nach Anspruch 5, 6 oder 7 oder Bausatz nach Anspruch 8, wobei ein Rotor (22, 24, 26, 28) durch das Gehäuse (10) gehaltert ist, wobei der Rotor aus einer Gruppe von Rotoren (20) ist, die Rotor für Asynchronmaschine (22), Rotor für Synchron-Reluktanzmaschine (26), Rotor für Synchron-Reluktanzmaschine mit Permanentmagneten (28), Rotor für Synchronmaschine und Rotor für permanenterregte Synchronmaschine (24) umfasst.

10. Verfahren zur Wartung eines Fahrzeugs nach Anspruch 5, 6, 7 oder 9 umfassend mindestens die Schritte:
- Auswählen eines für die Halterung durch das Gehäuse (10) geeigneten Rotors (22, 24, 26, 28) aus einer Gruppe von für die Halterung durch das Gehäuse geeigneten Rotoren (20), die wenigstens zwei Rotoren aus der Gruppe Rotor für eine Asynchronmaschine (22), Rotor für eine Synchron-Reluktanzmaschine (26), Rotor für eine Synchron-Reluktanzmaschine mit Permanentmagneten (28), Rotor für eine Synchronmaschine und Rotor für eine permanenterregte Synchronmaschine (24) umfasst;
- Haltern des ausgewählten Rotors (22, 24, 26, 28) durch das Gehäuse (10) zum Ausbilden einer elektrischen Maschine, bevorzugt einer Asynchronmaschine, einer Synchron-Reluktanzmaschine, einer Synchron-Reluktanzmaschine mit Permanentmagneten, einer Synchronmaschine oder einer permanenterregten Synchronmaschine; und
- Einrichten und/oder Einstellen der Steuerungseinheit (14), so dass die Steuerungseinheit (14) die für den Betrieb der ausgebildeten elektrischen Maschine erforderliche Ansteuerung erzeugen kann und umfassend keinen der Schritte:
- Austauschen des Gehäuses (10);
- Austauschen des Stators (12); oder
- Austauschen der Steuerungseinheit (14).

11. Verfahren zur Herstellung von mindestens zwei elektrischen Maschinen, insbesondere von Elektromotoren, für Fahrzeuge, insbesondere Flurförderzeuge, umfassend zur Herstellung einer ersten elektrischen Maschine mindestens die Schritte:
- Bereitstellen eines Gehäuses (10) mit Stator (12), einer elektrisch mit dem Stator (12) verbundenen Steuerungseinheit (14), die dafür ausgelegt ist, eingestellt und/oder eingerichtet zu werden, den Stator (12) mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst, und Verbindungsmitteln zum Haltern eines Rotors aus einer Gruppe von gleichen Gehäusen (10) für elektrische Maschinen; und
- Haltern eines ersten Rotors (22, 24, 26, 28) durch das Gehäuse, wobei der erste Rotor (22, 24, 26, 28) aus einer Gruppe von Rotoren (20) ist, die Rotor für Asynchronmaschine (22), Rotor für Synchron-Reluktanzmaschine (26), Rotor für Synchron-Reluktanzmaschine mit Permanentmagneten (28), Rotor für Synchronmaschine und Rotor für permanenterregte Synchronmaschine (24) umfasst;
und umfassend zur Herstellung einer weiteren elektrischen Maschine mindestens die Schritte:
- Bereitstellen eines weiteren Gehäuses (10) mit Stator (12), einer Steuerungseinheit (14), die dafür ausgelegt ist, eingestellt und/oder eingerichtet zu werden, den Stator (12) mit einem Ansteuermodus anzusteuern, der aus einer Gruppe ausgewählt ist, die wenigstens zwei Ansteuermodi aus der Gruppe Ansteuermodus für Stator einer Asynchronmaschine, Ansteuermodus für Stator einer Synchron-Reluktanzmaschine, Ansteuermodus für Stator einer Synchron-Reluktanzmaschine mit Permanentmagneten, Ansteuermodus für Stator einer Synchronmaschine und Ansteuermodus für Stator einer permanenterregten Synchronmaschine umfasst, und Verbindungsmitteln zum Haltern eines Rotors aus einer Gruppe von gleichen Gehäusen (10) für elektrische Maschinen; und
- Haltern eines weiteren Rotors (22, 24, 26, 28) durch das Gehäuse (10), wobei der weiterer Rotor (22, 24, 26, 28) ein anderer als der erste Rotor (22, 24, 26, 28) aus der Gruppe von Rotoren (20) ist, aus der auch der erste Rotor (22, 24, 26, 28) ausgewählt wurde.

12. Verfahren zur Herstellung von mindestens zwei elektrischen Maschinen nach Anspruch 11, ferner umfassend den Schritt:
- Einrichten und/oder Einstellen der Steuerungseinheit (14), insbesondere das Austauschen der Steuerungseinheit (14) umfassend, so dass die Ansteuerung des Stators durch die Steuerungseinheit entsprechend der Art des ersten Rotors (22, 24, 26, 28) oder des weiteren Rotors (22, 24, 26, 28) ermöglicht ist;
und umfassend keinen der Schritte:
- Austauschen des Gehäuses (10);
- Austauschen des Stators (12); oder
- Austauschen der Steuerungseinheit (14).

13. Verfahren zum Herstellen von mindestens zwei Fahrzeugen mit elektrischen Maschinen, insbesondere von Flurförderzeugen, unter Verwendung des Verfahrens nach Anspruch 10, 11 oder 12, wobei das Gehäuse (10) vor oder nach dem Haltern des Rotors (22, 24, 26, 28) in einem Fahrzeug angeordnet und vor oder nach dem Haltern des Rotors (22, 24, 26, 28) in einem Fahrzeug ausgebildet wird und das weitere Gehäuse (10) vor oder nach dem Haltern des weiteren Rotors (22, 24, 26, 28) in einem weiteren Fahrzeug angeordnet und vor oder nach dem Haltern des Rotors (22, 24, 26, 28) in einem weiteren Fahrzeug ausgebildet wird, um elektrische Maschinen der mindestens zwei Fahrzeuge auszubilden.

14. Verfahren nach einem der Ansprüche 1 bis 4 oder 10 bis 13 oder Fahrzeug nach einem der Ansprüche 5 bis 7 oder 9 oder Bausatz nach Anspruch 8, wobei die elektrische Maschine bzw. die elektrischen Maschinen ein Elektromotor ist bzw. Elektromotoren sind und/oder wobei das bzw. die Gehäuse (10) ein Motorgehäuse ist bzw. Motorgehäuse sind.
